# FASCICULE DE BREVET EUROPEEN

(11) **EP 0 700 566 B1**
(45) Date de publication et mention de la délivrance du brevet: **07.04.1999**
(21) Numéro de dépôt: 94931466.0
(22) Date de dépôt: 07.11.1994
(51) Int. Cl.: G11B 7/24

(54) **SYSTEME DE PROTECTION DE DISQUE A LECTURE OPTIQUE**
SCHUTZSYSTEM EINER OPTISCHEN SCHEIBE
OPTICAL DISK PROTECTION SYSTEM

(30) Priorité: 05.11.1993 BE 9301220
(43) Date de publication de la demande: 13.03.1996
(73) Titulaire: Chirchi, Mounir, 1080 Bruxelles (BE); Huberland, Xavier, 1060 Bruxelles (BE)
(72) Inventeur: Chirchi, Mounir, 1080 Bruxelles (BE); Huberland, Xavier, 1060 Bruxelles (BE)
(74) Mandataire: Claeys, Pierre
(86) Numéro de dépôt international: BE9400084
(87) Numéro de publication internationale: WO9512881

(56) Documents cités:
- EP-A- 0 375 298
- US-A- 4 879 710

## Description

La présente invention est relative à un système de protection à appliquer sur une face de lecture d'un disque à lecture optique à perçage central de diamètre prédéterminé, ce système comprenant une feuille de protection annulaire, sensiblement transparente, présentant une première face destinée à être appliquée sur la face de lecture du disque optique et une deuxième face opposée à la première, et un diamètre de bord externe et un diamètre de bord interne tels que ces bords viennent chacun en contact sur la face de lecture du disque dans une zone dépourvue d'informations optiques, le diamètre de bord interne étant supérieur au diamètre du perçage central.

Aujourd'hui avec un recul de plus de 10 ans, des études récentes ont démontré que le disque numérique, au départ annoncé comme support inusable, insensible aux poussières et aux rayures, semble ne pas tenir ses promesses, Pire, il serait même quasiment aussi fragile que les disques en vinyle. L'usure est plus insidieuse et elle ne devient perceptible qu'une fois le mal irréparable.

Les causes d'usure prématurée d'un enregistrement sur disque compact peuvent être classées sous deux catégories majeures :
1°) Mauvaises manipulations : tels que traces de doigts, salissures, griffes....
2°) Dégradations liées au lecteur lui-même : des rayures provoquées par la tête de lecture pour des types d'appareils comme des baladeurs ou des autoradios où chocs et vibrations mettent les dispositifs d'asservissement de la tête à rude épreuve.

Ces mêmes dégradations peuvent apparaître avec tous les types d'appareils à la suite de traces de doigts ou de salissures sur la face active du disque. En effet, la perte de réflexion vient fortement perturber le fonctionnement du dispositif d'asservissement en le conduisant dans certains cas lors de sa recherche désespérée de focalisation à toucher la surface du disque, d'où une rayure irrémédiable.

On connaît déjà des systèmes de protection de disque à lecture optique du type décrit dans le préambule de la revendication 1 (voir brevet US-A-4879710).

Ces protections présentent toutefois l'inconvénient d'une application et d'une fixation peu adéquates et peu pratiques. Le procédé de fixation faisant recours à deux anneaux de colle directement appliqués sur la protection pose un problème technique de réalisation. Effectivement, lors de la dépose de ces anneaux collants, la surface de la protection est alors exposée au risque de salissures. Ce système peut en outre poser un problème lors de l'application, l'anneau extérieur de colle pouvant entrer en contact avec le disque de manière prématurée et provoquer ainsi un pli se propageant sur toute la surface de la protection, avec tous les problèmes mécaniques et optiques qui s'ensuivent.

Ce même système de collage peut provoquer, suite à un échauffement, une dilatation inégale de la protection par rapport au disque, provoquant dans un premier temps une déformation provisoire de la protection suite à l'inertie thermique plus grande du disque; dans un deuxième temps, la protection se refroidissant plus vite que le disque, le phénomène de cisaillement provoque un glissement de l'anneau de colle; dans un troisième temps, le disque, lui aussi refroidi, reprend sa forme initiale provoquant ainsi une déformation définitive de la protection.

Ces systèmes de protection connus ne présentent en outre aucune correction optique de l'erreur provoquée par la présence d'une feuille de protection entre la tête de lecture et le disque lui-même.

La présente invention a pour but de porter remède aux inconvénients présentés par l'état connu de la technique. Avantageusement, le système de protection sera aisé à fabriquer et à remplacer s'il est lui-même endommagé. Son application sur le disque sera particulièrement aisée, sans nécessiter de centreur d'application.

On résout ce problème suivant l'invention par un système de protection du type décrit au début, ce système comprenant en outre une rondelle de fixation reliée centralement à la feuille de protection annulaire et présentant un bord interne de diamètre égal au diamètre du perçage central du disque optique, cette rondelle comportant une face au moins partiellement adhésive destinée à adhérer sur la face de lecture du disque optique dans au moins une partie d'une zone centrale de celui-ci, dépourvue d'informations optiques et non recouverte par la feuille de protection.

D'autres formes de réalisation avantageuses de l'invention sont indiquées dans les revendications 2 à 10.

La présente invention a également pour objet un disque à lecture optique muni d'un système de protection suivant l'invention.

L'invention couvre également un procédé de préparation d'un tel système de protection, ainsi qu'il est indiqué en particulier aux revendications 12 à 14.

D'autres détails et particularités de l'invention ressortiront de la description donnée ci-après, à titre non limitatif et avec référence aux dessins annexés.

La figure 1 représente de manière schématique et en coupe un disque optique muni d'un système de protection suivant l'invention, en position de lecture.

La figure 2 représente une vue en perspective déployée d'un système de protection suivant l'invention.

La figure 3 représente une vue en coupe axiale d'un système de protection suivant l'invention.

Les figures 4 à 7 représentent les différentes étapes d'un procédé de préparation de système de protection suivant l'invention.

Sur les différentes figures, les éléments identiques sont désignés par les mêmes références.

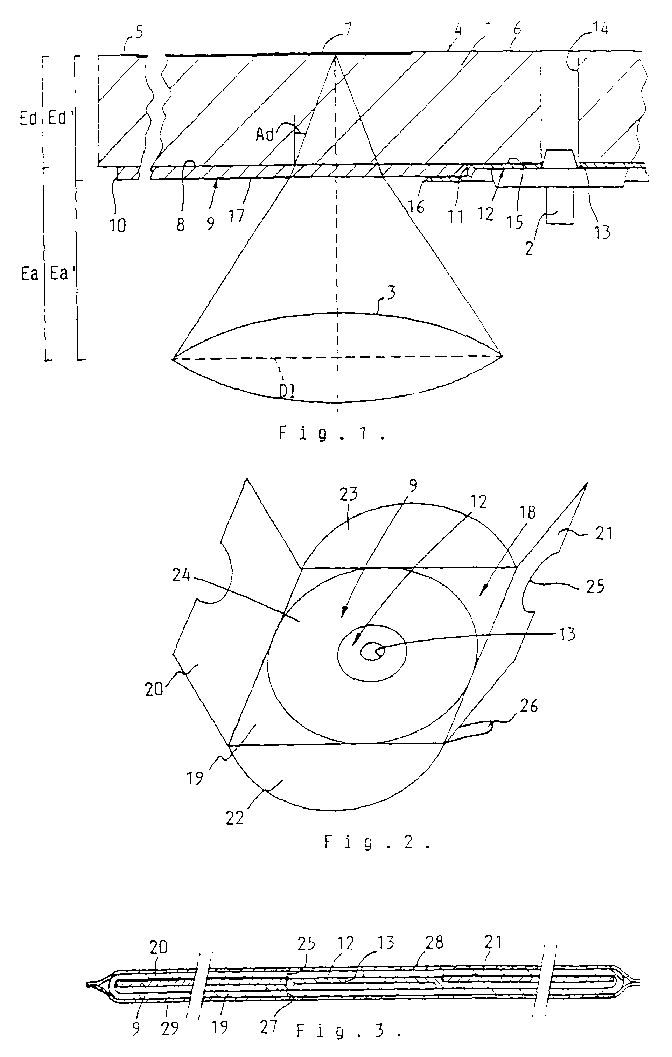

Ainsi qu'il ressort de la figure 1, un disque 1 à lecture optique est disposé sur un arbre d'entraînement en rotation 2 du dispositif de lecture non représenté. Une lentille 3 de la tête de lecture de ce dispositif est représentée de manière schématique ainsi que le faisceau optique LASER qui lit les informations numériques portées au revers de la face supérieure 4 du disque. Aucune information de ce genre ne se trouve ni dans la zone périphérique 5 du disque, ni dans sa zone centrale 6; la zone portant des informations numériques est représentée sur la figure 1 par un trait plus épais 7.

Sur la face dite de lecture du disque, désignée par la référence 8, est appliquée, par une première face, une feuille de protection 9 annulaire en un film transparent. Cette feuille possède un bord externe 10 et un bord interne 11 tels que ces bords viennent en contact sur la face de lecture 8 du disque, dans une zone dépourvue d'informations numériques de celui-ci, c'est-à-dire en face des zones 5 et respectivement 6. Le diamètre du bord interne 11 de la feuille de protection 9 est supérieur à celui du perçage central 14 du disque.

Le système de protection suivant l'invention comprend en outre une rondelle de fixation 12, reliée centralement à la feuille de protection 9 annulaire. Cette rondelle 12 présente un bord interne 13 de diamètre égal au diamètre du perçage central 14 du disque optique. Elle comporte une face 15 au moins partiellement adhésive qui adhère sur la face de lecture 8 dans au moins une partie d'une zone centrale du disque, qui est dépourvue d'informations optiques et qui n'est pas recouverte par la feuille de protection 9.

Dans l'exemple de réalisation illustré, la liaison entre la feuille de protection transparente 9 et la rondelle de fixation 12 est obtenue par le fait que cette dernière a un bord externe 16 de diamètre supérieur au diamètre du bord interne 11 de la feuille de protection 9. La rondelle adhère ainsi par sa face adhésive sur la périphérie interne de la deuxième face 17, opposée à la première précitée, de la feuille de protection.

La rondelle de fixation 12 présente avantageusement un bord externe 16 tel qu'il ne se trouve pas en face d'une zone d'information optique du disque.

Il doit être entendu que d'autres modes de liaison entre la rondelle 12 et la feuille de protection 9 sont imaginables, et on peut notamment prévoir que ces deux éléments soient façonnés d'une pièce.

Dans l'exemple de réalisation illustré, la rondelle de fixation 12 est formée à partir d'une bande adhésive, qui permet une bonne adhérence sur le disque, tout en autorisant son détachement à partir de celui-ci par pelage, ce qui facilite et la fixation et le remplacement du système de protection sur le disque.

Dans l'exemple de réalisation illustré, la feuille de protection 9 et la face de lecture 8 du disque sont maintenus ensemble, non seulement par l'intermédiaire de l'adhésion de la rondelle de fixation 12 au centre du disque 1, mais aussi par la force électrostatique créée entre la feuille transparente de protection et le disque. Cela permet d'éviter ainsi les problèmes de dilatation thermique connus par les systèmes de protection de la technique antérieure.

De préférence, la rondelle de fixation suivant l'invention a une épaisseur prédéterminée. Lorsqu'elle est intercalée, comme sur la figure 1, entre la tête de l'arbre d'entraînement en rotation 2 du dispositif de lecture et la face de lecture 8, elle soulève le disque et donc l'écarte de la lentille 3 d'une distance qui permet de compenser l'erreur de focalisation engendrée par la présence de la feuille de protection 9 transparente située entre la lentille 3 et la face de lecture du disque.

Cet agencement offre le grand avantage de ramener la lentille 3 du système de mise au point du dispositif de lecture à la position nominale établie par les fabricants de lecteurs de disques optiques. Les capacités de correction du système de mise au point ne sont donc pas amoindries par la présence de la feuille de protection, comme c'est le cas selon la technique antérieure.

Suivant une forme de réalisation perfectionnée de l'invention, illustrée en particulier sur les figures 2 et 3, la feuille de protection 9, munie de la rondelle de fixation 12, est logée, avant son application sur le disque, dans une enveloppe 18, par exemple en papier plastifié. Cette enveloppe comprend un pan 19, adjacent à la deuxième face susdite 17 de la feuille de protection 9 et au moins deux rabats, dans le cas présent quatre rabats 20 à 23, qui sont chacun reliés à un bord du pan 19 et peuvent être repliés sur la première face 24 de la feuille de protection 9, face qui est destinée à venir en contact avec la face de lecture 8 du disque. Ainsi qu'il ressort des figures 2 et 3, ces rabats sont découpés et dimensionnés de façon à former ensemble une ouverture 25 de diamètre égal ou inférieur au bord interne 11 (figure 1) de la feuille de protection, ce qui libère la partie adhésive de la rondelle de fixation 12. Il faut noter que ces rabats sont simplement repliés et ne tiennent pas l'un à l'autre; ils ne sont pas non plus reliés à la feuille de protection.

Ainsi qu'il ressort de la figure 2, le pan 19 peut présenter du côté extérieur une patte de préhension 26. Sur la figure 3, on peut observer que le pan 19 présente lui aussi une ouverture centrale 27. Celle-ci peut correspondre à l'ouverture 25 dans les rabats. Elle peut aussi avoir une dimension différente, pour autant que son diamètre ne soit pas inférieur à celui du bord interne 13 de la rondelle de fixation 12.

Dans l'exemple de réalisation illustré sur la figure 3, le système de protection suivant l'invention comprend en outre un film de revêtement 28 qui recouvre les rabats et leur ouverture de manière à pouvoir être pelé à partir de ceux-ci avant l'emploi. On peut prévoir un autre film de revêtement 29 pour recouvrir le pan 19 et son ouverture de manière à pouvoir être pelé. Aux extrémités, ces deux films peuvent aussi être scellés entre eux ce qui forme un emballage étanche pour le système de protection suivant l'invention.

Pour appliquer le système de protection suivant l'invention sur le disque 1, il faut tout d'abord retourner le disque dans son boîtier d'origine avec la face de lecture vers le haut. On pèle ensuite les films de revêtement 28 et 29, l'enveloppe formée du pan 19 et des rabats 20 à 23 protégeant la feuille protection 9 de toute salissure, mais libérant la partie adhésive de la rondelle de fixation 12. Cet ensemble est alors appliqué autour de la griffe usuelle (non représentée) du boîtier qui retient le disque immobile. Il n'y a donc pas besoin d'élément de centrage, le bord interne 13 de la rondelle de fixation s'adaptant autour de ladite griffe et centrant immédiatement le système de protection par rapport au disque. Par application d'une pression sur la partie centrale du système de protection, par exemple à travers l'ouverture 27 du pan 19 ou sur une partie centrale du pan lui-même, on provoque une adhésion de la rondelle de fixation 12 sur la partie centrale du disque 1.

Il suffit alors de saisir la patte de préhension, ou le pan 19 lui-même, de l'enveloppe et d'écarter l'enveloppe du disque. Les rabats 20 et 23 se déploient alors en glissant entre la face de lecture 8 du disque et la première face 24 de la feuille de protection. Celle-ci reste fixée en position par la rondelle de fixation 12 qui adhère au disque et qui donc la retient.

Par la force électrostatique créée entre la feuille de protection transparente 9 et la face de lecture 8 du disque, la feuille de protection s'applique parfaitement sur le disque.

On peut prévoir la possibilité de peler la rondelle 12 de fixation, lorsque la feuille de protection 9 a été abîmée, pour permettre son remplacement de la manière décrite ci-dessus par une nouvelle feuille de protection.

On peut noter que toutes ces opérations ont été effectuées en gardant la face 24 de la feuille de protection transparente à l'abri de tout contact avec l'opérateur ou le milieu extérieur jusqu'à la phase finale.

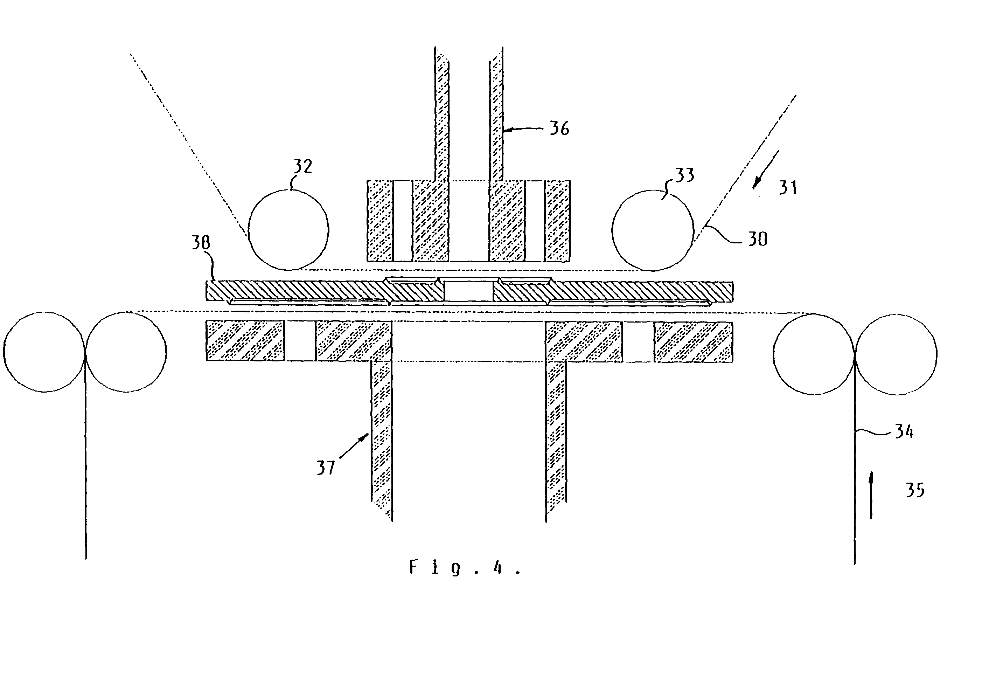

Les figures 4 à 7 illustrent un mode de fabrication possible d'un système de protection suivant l'invention tel qu'illustré sur la figure 1.

Dans le procédé illustré, une bande adhésive 30 est déroulée pas à pas dans le sens indiqué par la flèche 31 de façon à passer horizontalement entre deux rouleaux de renvoi 32 et 33. De même une bande 34, par exemple en polycarbonate transparent, est déroulée pas à pas suivant le sens de la flèche 35 de façon à passer horizontalement à une certaine distance en dessous de la bande adhésive 30.

Au-dessus des bandes se trouve au moins un poinçon 36 déplaçable vers le haut et vers le bas. En dessous des bandes on peut observer aussi au moins un poinçon 37, déplaçable vers le haut et vers le bas. Dans la position représentée sur la figure 4, les poinçons sont écartés l'un de l'autre, et une matrice 38 a été introduite, de la gauche sur le dessin, entre les deux bandes 30 et 34 à découper. Cette matrice est conformée en haut de façon à permettre la découpe dans la bande 30 de rondelles ayant la forme des rondelles de fixation 12 et en bas de façon à permettre la découpe dans la bande 34 de feuilles annulaires ayant la forme des feuilles de protection 9.

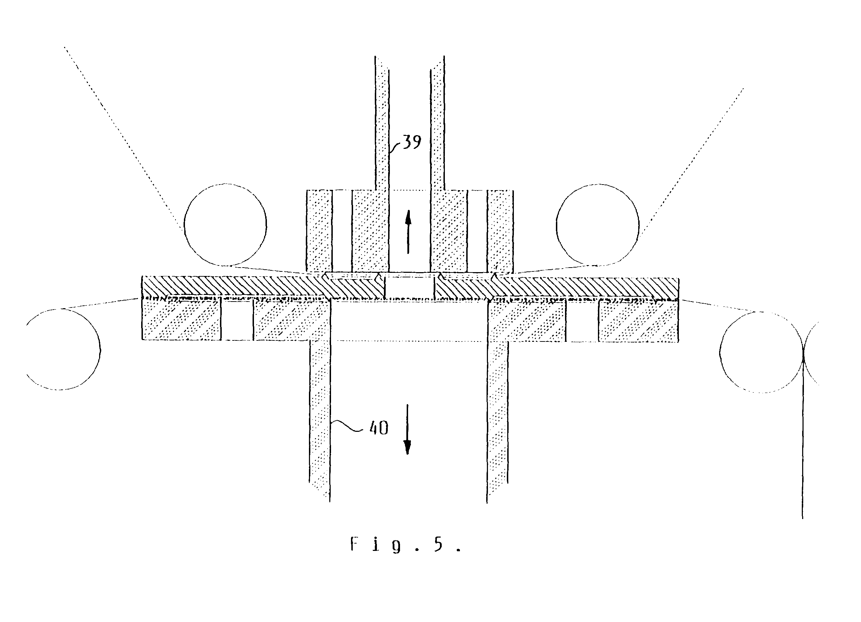

L'étape de découpe est illustrée sur la figure 5, où les deux poinçons 36 et 37 sont rapprochés l'un de l'autre et pressent entre eux la bande 30, la matrice 38 et la bande 34. Les déchets de découpe correspondant aux ouvertures centrales des rondelles de fixation et des feuilles annulaires de protection sont évacués par aspiration vers le bas dans un alésage central 40 du poinçon 37. L'appel d'air s'effectue par l'alésage central 39 du poinçon 36, à travers une ouverture centrale de la matrice 38.

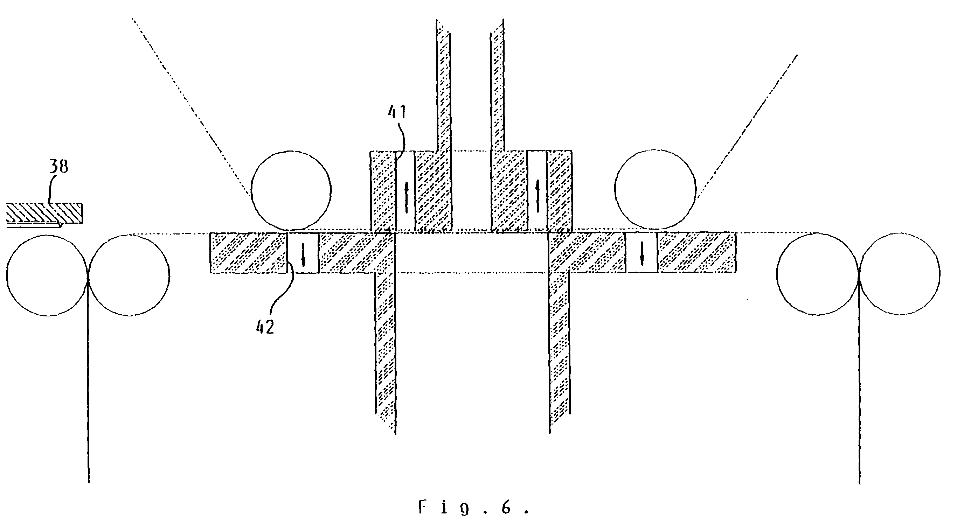

Après la découpe, les poinçons 36 et 37 sont à nouveau écartés et la matrice 38 revient dans sa position initiale, à gauche sur la figure 6. Ainsi qu'il ressort de cette figure 6, les poinçons 36 et 37 sont alors à nouveau rapprochés de façon à presser entre eux une rondelle de fixation découpée et une feuille annulaire de protection découpée. Il y a alors collage, thermoscellage ou un autre mode de fixation entre le bord interne de la feuille de protection et le bord externe de la rondelle de fixation.

Pendant ces mouvements des pistons, une aspiration est créée par des alésages périphériques 41 et respectivement 42 des pistons 36 et respectivement 37, de manière que la rondelle de fixation et la feuille annulaire de protection préalablement découpées adhèrent à leur piston respectif.

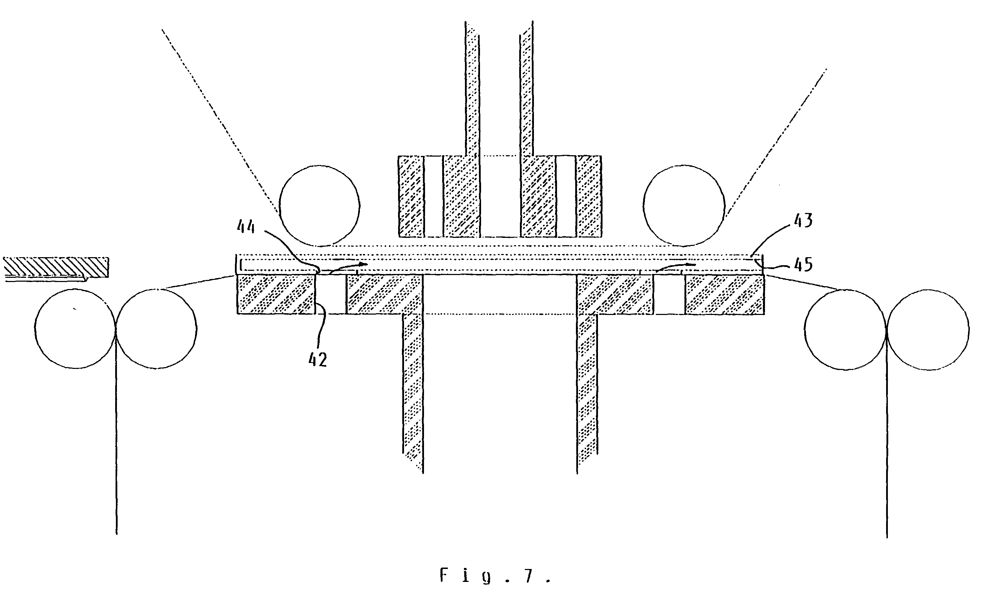

Après le collage, ainsi qu'il est représenté sur la figure 7, les poinçons sont à nouveau écartés pour permettre l'insertion au-dessus du système de protection suivant l'invention d'un chariot 43 à partir de la droite sur le dessin. Le système de protection est pendant ce temps maintenu par une aspiration vers le bas à travers les alésages 42 du poinçon 37. Lorsque le chariot 43 est appliqué sur le système de protection, l'aspiration par les alésages 42 est stoppée, tandis qu'une nouvelle aspiration est créée par les orifices 44 du chariot et la cavité centrale 45 de celui-ci. Le système de protection est alors emporté par le chariot 43 vers la droite, après un écartement supplémentaire du poinçon 37.

Le système de protection est ensuite transféré à un dispositif de mise sous enveloppe connu en soi, par exemple un appareil H8H de la firme Multipli, puis à un dispositif d'application de films de scellage également connu en soi.

Il est entendu que d'autres procédés de fabrication peuvent être aisément conçus sans sortir du cadre de l'invention.

### Exemple

On va à présent décrire à titre illustratif un exemple de réalisation de système de protection suivant l'invention, prévu pour compenser l'erreur de focalisation due à la présence de la feuille de protection transparente sur la face de lecture du disque.

Différents paramètres définissent le rayon laser dans le disque. Dans le présent exemple, on a déterminé les paramètres suivants :
indice de réfraction de l'air (na) = 1
indice de réfraction du disque en polycarbonate (nd) = 1,586
épaisseur du disque (Ed) = 1,2 mm
diamètre du rayon à la sortie de la lentille (D1) = 3 mm
diamètre d'impact sur la face de lecture transparente 8 du disque (Dd) = 1 mm
diamètre d'impact sur la face réfléchissante 4 du disque (Df) = 0,001 mm

A partir de ces données, on peut calculer l'angle que forme le rayon dans le disque (Ad) par rapport à la normale à la surface du disque. L'angle nominal dans le disque est exprimé en radians dans le calcul :
Ad = ArcTAN (Dd - Df)/(2.Ed))
Ad = ArcTAN((1-0,001)/(2.1,2)) = ArcTAN(0,41625) = 0,39444 Rad (22,5995°)

Lors de son passage du disque en polycarbonate vers l'air, le rayon subit une réfraction. On peut calculer l'angle que forme alors le rayon par rapport à la normale du disque (Aa) :
Aa = ArcSIN (nd.SIN(Ad)/na)
Aa = ArcSIN(1,586.SIN(0,39444)/1) = ArcSIN(0,609486) = 0,655411 Rad (37,552341°)

Connaissant cet angle (Aa) et les diamètres du rayon laser sur le disque (Dd) et à la sortie de la lentille (D1), on peut calculer la hauteur nominale de la lentille (Ea) par rapport au disque.
Ea = (D1-Dd)/(2.TAN(Aa))
Ea = (3-1)/(2.TAN(0,655411)) = 1,300766 mm

Lorsque l'on place une couche de polycarbonate pour protéger le disque, cela revient au même que d'augmenter l'épaisseur du disque. Cela provoque un déplacement de la lentille, et on obtient ainsi une nouvelle valeur de la position de la lentille par rapport au disque. L'erreur de focalisation est égale à la différence entre la position nominale et celle après application de la couche de protection.
Ed' a ici une valeur de 1,280 mm au contraire des 1,200 mm de Ed.
Ad' = ArcTAN(1-0,001)/(2.1,280)) = ArcTan(0,390234) = 0,3720595 Rad (21,31743°)
Aa' = ArcSIN(1,586.SIN(0,390234)/1) =ArcSIN(0,603323) = 0,647661 Rad (37,108235°)
Ea' = (3-1)/(2.TAN(0,647661)) = 1,321842 mm
Erreur de focalisation = 1,321842 - 1,300766 = 0,021076 mm

L'épaisseur de la rondelle de fixation 12 du système de protection suivant l'invention est alors calculée en fonction de cette erreur de focalisation.

## Revendications

1. Système de protection à appliquer sur une face de lecture (8) d'un disque à lecture optique (1) à perçage central (14) de diamètre prédéterminé,
comprenant une feuille de protection annulaire(9), sensiblement transparente, présentant une première face (24) destinée à être appliquée sur la face de lecture (8) du disque optique et une deuxième face (17) opposée à la première, et un diamètre de bord externe (10) et un diamètre de bord interne (11) tels que ces bords viennent chacun en contact sur la face de lecture (8) du disque, dans une zone dépourvue d'informations optiques de celui-ci, le diamètre de bord interne (11) étant supérieur au diamètre du perçage central (14),
caractérisé en ce qu'il comprend en outre
une rondelle de fixation (12) reliée centralement à la feuille de protection (9) et présentant un bord interne (13) de diamètre égal au diamètre du perçage central (14) du disque optique, cette rondelle (12) comportant une face (15) au moins partiellement adhésive destinée à adhérer sur la face de lecture (8) du disque optique dans au moins une partie d'une zone centrale de celui-ci, dépourvue d'informations optiques et non recouverte par la feuille protection.

2. Système suivant la revendication 1, caractérisé en ce que la rondelle (12) présente un bord externe (16) de diamètre supérieur au diamètre de bord interne (11) de la feuille de protection (9).

3. Système suivant la revendication 2, caractérisé en ce que la face (15) de la rondelle (12) destinée à adhérer sur la face de lecture (8) du disque optique est totalement adhésive et en ce qu'elle adhère aussi sur la périphérie interne de la deuxième face (17) de la feuille de protection (9).

4. Système suivant l'une quelconque des revendications 1 à 3, caractérisé en ce que la rondelle de fixation (12) est constituée à partir d'une bande adhésive qui, en position d'adhésion sur le disque, est pelable à partir de celui-ci.

5. Système suivant l'une quelconque des revendications 1 à 4, caractérisé en ce que la feuille de protection (9) et la face de lecture (8) du disque optique présentent entre elles, en position d'application l'une sur l'autre, une force électrostatique qui les maintient ensemble.

6. Système suivant l'une quelconque des revendications 1 à 5, caractérisé en ce que la rondelle (12) a une épaisseur déterminée pour compenser, lorsqu'elle est intercalée entre une tête d'entraînement en rotation (2) du disque optique d'un dispositif de lecture de ce disque et la face de lecture (8) de ce dernier, une erreur de focalisation engendrée par la présence de la feuille de protection (9) entre ce dispositif de lecture (3) et la face de lecture (8) du disque.

7. Système de protection suivant l'une quelconque des revendications 1 à 6, caractérisé en ce qu'il comprend en outre une enveloppe (18) dans laquelle est logée la feuille de protection (9) munie de sa rondelle de fixation (12) et en ce que cette enveloppe (18) comprend un pan (19), adjacent à la deuxième face (17) de la feuille de protection (9), qui est percé centralement d'une ouverture (27) présentant un diamètre au moins égal à celui du bord interne (13) de la rondelle (12) et au moins deux rabats (20-23) fixés au pan (19) susdit de manière à pouvoir être repliés sur la première face (24) de la feuille de protection (9), ces au moins deux rabats (20-23) formant ensemble une ouverture (25) de diamètre égal ou inférieur au bord interne (11) de la feuille de protection (9), qui libère la partie adhésive de la face (15) de la rondelle de fixation (12) destinée à adhérer sur la face de lecture (8) du disque optique.

8. Système de protection suivant la revendication 7, caractérisée en ce que l'enveloppe (18) comprend quatre rabats (20-23) repliés sur la première face (24) de la feuille de protection (9).

9. Système de protection suivant l'une ou l'autre des revendications 7 et 8, caractérisé en ce que ledit pan (19) est pourvu d'une patte de préhension (26) permettant d'effectuer une traction sur l'enveloppe (18) et de la séparer de la feuille de protection (9) lorsque la rondelle de fixation (12) adhère à un disque optique.

10. Système de protection suivant l'une quelconque des revendications 7 à 9, caractérisé en ce que ces au moins deux rabats (20-23) et leur ouverture (25) sont recouverts d'un film de revêtement (28) pelable et en ce qu'éventuellement le pan (19) est recouvert lui aussi d'un tel film (29).

11. Disque optique muni d'un système de protection suivant l'une quelconque des revendications 1 à 6.

12. Procédé de préparation d'un système de protection de disque optique suivant l'une quelconque des revendications 1 à 6, comprenant
- un découpage de la feuille de protection annulaire (9) à partir d'une première bande de matière (34) et de la rondelle de fixation (12) à partir d'une deuxième bande adhésive (30), et
- une fixation de la rondelle de fixation (12) au centre de la feuille de protection annulaire (9).

13. Procédé de préparation d'un système de protection de disque optique suivant l'une quelconque des revendications 7 à 10, caractérisé en ce qu'il comprend
- un découpage de la feuille de protection annulaire (9) à partir d'une première bande de matière (34), et de la rondelle de fixation (12) à partir d'une deuxième bande adhésive (30),
- une fixation de la rondelle de fixation (12) au centre de la feuille de protection annulaire (9), et
- une introduction de la feuille de protection annulaire (9), munie de la rondelle de fixation (12), à l'intérieur d'une enveloppe (18).

14. Procédé de préparation suivant la revendication 13, caractérisé en ce qu'il comprend en outre une application sur les rabats (20-23) de l'enveloppe (18) et éventuellement sur ledit pan (19) de celle-ci d'un film de revêtement pelable (28, 29).

## Patentansprüche

1. Schutzsystem zum Aufbringen auf einer Leseseite bzw. -fläche (8) einer optisch zu lesenden Scheibe bzw. Platte (1) mit zentraler Bohrung (14) mit vorbestimmtem Durchmesser, umfassend eine ringförmige, im wesentlichen transparente Schutzfolie (9), die eine erste Seite (24), die dafür bestimmt ist, auf der Leseseite (8) der optischen Scheibe aufgebracht zu werden, und eine zweite, der ersten gegenüberliegende Seite (17) und einen Durchmesser des äußeren Randes (10) und einen Durchmesser des inneren Randes (11) aufweist, sodaß diese Ränder jeweils mit der Leseseite (8) der Scheibe in einer von optischen Informationen derselben freien zone in Kontakt gelangen, wobei der Durchmesser des inneren Randes (11) größer als der Durchmesser der zentralen Bohrung (14) ist,
dadurch gekennzeichnet, daß es außerdem eine Festlegungslochscheibe (12) umfaßt, die zentral mit der Schutzfolie bzw. dem Schutzblatt (9) verbunden ist und einen Innenrand (13) mit einem dem Durchmesser der zentralen Bohrung (14) der optischen Scheibe gleichen Durchmesser aufweist, welche Lochscheibe (12) eine wenigstens teilweise haftfähige Seite bzw. Fläche (15) aufweist, die dazu bestimmt ist, an der Leseseite (8) der optischen Scheibe in wenigstens einem Teil eines zentralen Bereiches derselben, welcher frei von optischen Informationen ist und nicht durch die Schutzfolie bedeckt ist, anzuhaften.

2. System nach Anspruch 1, dadurch gekennzeichnet, daß die Lochscheibe (12) einen Außenrand (16) mit gegenüber dem Durchmesser des Innenrandes (11) der Schutzfolie (9) größerem Durchmesser aufweist.

3. System nach Anspruch 2, dadurch gekennzeichnet, daß die Seite (15) der Lochscheibe (12), die dazu bestimmt ist, auf der Leseseite (8) der optischen Scheibe anzuhaften, vollständig haft fähig ist und daß sie auch auf dem Innenumfang der zweiten Seite (17) der Schutzfolie (9) anhaftet.

4. System nach einem der Ansprüche 1 bis 3, dadurch gekennzeichnet, daß die Festlegungslochscheibe (12) ausgehend von einem Klebeband gebildet ist, das in der Klebeposition auf der Scheibe ausgehend von derselben abziehbar ist.

5. System nach einem der Ansprüche 1 bis 4, dadurch gekennzeichnet, daß die Schutzfolie (9) und die Leseseite (8) der optischen Scheibe untereinander in der Aufbringungsposition von einer auf der anderen eine elektrostatische Kraft aufweisen, welche sie zusammenhält.

6. System nach einem der Ansprüche 1 bis 5, dadurch gekennzeichnet, daß die Lochscheibe (12) eine Dicke aufweist, welche bestimmt ist, wenn sie zwischen einem Drehantriebskopf (2) der optischen Scheibe einer Lesevorrichtung für diese Scheibe und der Leseseite (8) der letzteren eingesetzt ist, einen durch das Vorhandensein der Schutzfolie (9) zwischen der Lesevorrichtung (3) und der Leseseite (8) der Scheibe bewirkten Fokussierfehler zu kompensieren.

7. Schutzsystem nach einem der Ansprüche 1 bis 6, dadurch gekennzeichnet, daß es außerdem eine Hülle (18) umfaßt, in welcher die mit ihrer Festlegungslochscheibe (12) versehene Schutzfolie (9) angeordnet ist, und daß diese Hülle (18) eine Fläche (19) benachbart der zweiten Seite (17) der Schutzfolie (9) umfaßt, welche zentral mit einer Öffnung (27) durchbohrt ist, welche einen Durchmesser mindestens gleich wie jenen des Innenrandes (13) der Lochscheibe (12) und wenigstens zwei an der obengenannten Fläche (19) festgelegte Umschläge bzw. Klappen (20 - 23) aufweist, sodaß diese über die erste Seite (24) der Schutzfolie (9) gefaltet werden können, wobei diese wenigstens zwei Umschläge (20 - 23) gemeinsam eine Öffnung (25) mit einem dem inneren Rand (11) der Schutzfolie (9) gleichen oder kleineren Durchmesser ausbilden, welcher den haftfähigen Bereich der Seite (15) der Festlegungslochscheibe (12), die dazu bestimmt ist, auf der Leseseite (8) der optischen Scheibe anzuhaften, freiläßt.

8. Schutzsystem nach Anspruch 7, dadurch gekennzeichnet, daß die Hülle (18) vier Umschläge (20 - 23), die über die erste Seite (24) der Schutzfolie (9) gefaltet sind, aufweist.

9. Schutzsystem nach einem der Ansprüche 7 oder 8, dadurch gekennzeichnet, daß die Fläche (19) mit einer Greiflasche (26) versehen ist, welche es erlaubt, einen Zug auf die Hülle (18) auszuüben und sie von der Schutzfolie (9) zu trennen, wenn die Festlegungslochscheibe (12) an einer optischen Scheibe anhaftet.

10. Schutzsystem nach einem der Ansprüche 7 bis 9, dadurch gekennzeichnet, daß wenigstens zwei Umschläge (20 - 23) und ihre Öffnung (25) von einem abziehbaren Abdeckfilm (28) bedeckt sind und daß gegebenenfalls die Fläche (19) ebenfalls von einem derartigen Film (29) bedeckt ist.

11. Optische Scheibe, ausgestattet mit einem Schutz system gemäß einem der Ansprüche 1 bis 6.

12. Verfahren zur Herstellung eines Schutzsystems für eine optische Scheibe nach einem der Ansprüche 1 bis 6, umfassend
- ein Ausschneiden der ringförmigen Schutzfolie (9), ausgehend von einem ersten Materialband (34), und der Festlegungslochscheibe (12), ausgehend von einem zweiten, haftfähigen Materialband (30), und
- eine Festlegung der Festlegungslochscheibe (12) im Zentrum der ringförmigen Schutzfolie (9).

13. Verfahren zur Herstellung eines Schutzsystems für eine optische Scheibe nach einem der Ansprüche 7 bis 10, dadurch gekennzeichnet, daß es umfaßt
- ein Ausschneiden der ringförmigen Schutzfolie (9), ausgehend von einem ersten Materialband (34), und der Festlegungslochscheibe (12), ausgehend von einem zweiten, haftfähigen Materialband (30),
- eine Festlegung der Festlegungslochscheibe (12) im Zentrum der ringförmigen Schutzfolie (9), und
- ein Einführen der ringförmigen Schutzfolie (9), die mit der Festlegungslochscheibe (12) versehen ist, in das Innere einer Hülle (18).

14. Verfahren zur Herstellung gemäß Anspruch 13, dadurch gekennzeichnet, daß es außerdem ein Anbringen eines abziehbaren Überzugsfilms (28, 29) auf den Umschlägen (20 - 23) der Hülle (18) und gegebenenfalls auf der Fläche (19) derselben umfaßt.

## Claims

1. A protection system to be applied to a read side (8) of an optical disk (1) with a centre bore (14) of predetermined diameter,
comprising a substantially transparent annular protective film (9), with a first side (24) which is intended to be applied to the read side (8) of the optical disk and a second side (17) opposite the first, and an external edge diameter (10) and an internal edge diameter (11) such that these edges each come into contact with the read side (8) of the disk in a zone thereof not containing optical data, the internal edge diameter (11) being greater than the diameter of the centre bore (14),
characterised in that it further comprises
a securing washer (12) connected centrally to the protective film (9) and having an inner edge (13) of a diameter equal to the diameter of the centre bore (14) of the optical disk, said washer (12) comprising an at least partly adhesive surface (15) intended to adhere to the read side (8) of the optical disk in at least one part of a central zone thereof not containing optical data and not covered by the protective film.

2. A system according to claim 1, characterised in that the washer (12) has an outer edge (16) of greater diameter than the inner edge (11) of the protective film (9).

3. A system according to claim 2, characterised in that the surface (15) of the washer (12) intended to adhere to the read side (8) of the optical disk is wholly adhesive, and in that it also adheres to the inner periphery of the second side (17) of the protective film (9).

4. A system according to any one of claims 1 to 3, characterised in that the securing washer (12) is formed from an adhesive strip which, when in position adhering to the disk, can be peeled therefrom.

5. A system according to any one of claims 1 to 4, characterised in that the protective film (9) and the read side (8) of the optical disk have between them, in the position in which they are applied one on the other, an electrostatic force which keeps them together.

6. A system according to any one of claims 1 to 5, characterised in that the washer (12) is of given thickness so as to compensate, when it is inserted between a rotary drive head (2) for the optical disk of a device for read this disk and the read side (8) thereof, for a focusing error caused by the presence of the protective film (9) between this reading device (3) and the read side (8) of the disk.

7. A protection system according to any one of Claims 1 to 6, characterised in that it further comprises an envelope (18) in which the protective film (9) is accommodated, provided with its securing washer (12), and in that said envelope (18) comprises a panel (19), adjacent the second side (17) of the protective film (9), which is pierced centrally by an opening (27) having a diameter at least equal to that of the inner edge (13) of the washer (17) and at least two flaps (20-23) secured to said panel (19) so that they can be folded on to the first side (24) of the protective film (9), said at least two flaps (20-23) forming together an opening (25) of a diameter which is equal to or less than the internal edge (11) of the protective film (9), which frees the adhesive part of the surface (15) of the securing washer (12) intended to adhere to the read side (8) of the optical disk.

8. A protection system according to Claim 7, characterised in that the envelope (18) comprises four flaps (20-23) folded on to the first side (24) of the protective film (9).

9. A protection system according to either one of Claims 7 and 8, characterised in that said panel (19) is provided with a grip tab (26) making it possible to exert a pull on the envelope (18) and to separate it from the protective film (9) when the securing washer (12) adheres to an optical disk.

10. A protection system according to any one of Claims 7 to 9, characterised in that these at least two flaps (20-23) and their opening (25) are covered with a peelable coating film (28), and in that, optionally, the panel (19) is also covered with such a film (29).

11. An optical disk provided with a protection system according to any one of Claims 1 to 6.

12. A method of preparing a protection system for an optical disk according to any one of claims 1 to 6, comprising
- cutting the annular protective film (9) from a first strip of material (34) and the securing washer (12) from a second adhesive strip (30), and
- fastening the securing washer (12) to the centre of the annular protective film (9).

13. A method of preparing a protection system for an optical disk according to any one of claims 7 to 10,
characterised in that it comprises
- cutting the annular protective film (9) from a first strip of material (34) and the securing washer (12) from a second adhesive strip (30),
- fastening the securing washer (12) to the centre of the annular protective film (9), and
- introducing the protective film (9), provided with the securing washer (12) into an envelope (18).

14. A method of preparation according to claim 13, characterised in that it further comprises applying a peelable coating film (28,29) on to the flaps (20-23) of the envelope (18) and, optionally, on to the panel (19) thereof.
